(19) Europäisches Patentamt / European Patent Office / Office européen des brevets

(11) **EP 2 717 503 B1**

(12) **FASCICULE DE BREVET EUROPEEN**

(45) Date de publication et mention
de la délivrance du brevet:
**17.07.2019 Bulletin 2019/29**

(51) Int Cl.:
***H04L 1/00*** *(2006.01)*

(21) Numéro de dépôt: **13187250.9**

(22) Date de dépôt: **03.10.2013**

(54) **Procédé de transmission avec mécanisme d'adaptation des modes de codage et de modulation à marge dynamique**

Übertragungsverfahren mit Anpassungsverfahren der Kodiermodi und dynamischer Modulationsspanne

Transmission method with a mechanism for adapting coding and modulation modes with a dynamic margin

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.10.2012 FR 1202672**

(43) Date de publication de la demande:
**09.04.2014 Bulletin 2014/15**

(73) Titulaire: **Thales**
**92200 Neuilly Sur Seine (FR)**

(72) Inventeurs:
• **Eudes, Jacques**
**92622 Gennevilliers Cedex (FR)**

• **Touret, Marc**
**92622 Gennevilliers Cedex (FR)**
• **Pailler, Jullien**
**92622 Gennevilliers Cedex (FR)**

(74) Mandataire: **Lavoix**
**2, place d'Estienne d'Orves**
**75441 Paris Cedex 09 (FR)**

(56) Documents cités:
**WO-A1-00/04650         WO-A1-2011/096862**
**WO-A2-2006/104596    US-A1- 2002 058 505**
**US-A1- 2004 151 122**

**Description**

La présente invention concerne un procédé de transmission entre un émetteur et un récepteur en utilisant un mode de codage et de modulation adaptatif, dans lequel le codage et la modulation sont choisis en fonction de la comparaison d'une variable caractéristique du rapport signal sur bruit mesuré par le récepteur avec une valeur de seuil augmenté d'une marge, laquelle marge est variable en fonction de l'évolution antérieure du rapport signal sur bruit.

Les transmissions, notamment par satellite en bandes EHF et Ka sont sensibles à différents phénomènes qui sont susceptibles de dégrader le bilan de la liaison entre un émetteur et un récepteur. Ces phénomènes peuvent conduire à des variations très rapides telles que le masquage ou le brouillage. Le lien de la liaison peut alors être réduit de plusieurs décibels par seconde.

D'autres phénomènes, telles que les variations météorologiques, notamment la pluie ou le dépointage de l'antenne ont des effets rapides conduisant à une diminution du gain de quelques dixièmes de décibels par secondes.

Par exemple, le document US 2002/0058505 décrit un procédé de compensation de l'atténuation due à la pluie dans un système de communication satellite et un dispositif associé. Enfin, d'autres phénomènes, telle que la situation géographique du récepteur lorsque celui-ci est mobile peuvent conduite à des variations plus lentes du gain de la liaison de l'ordre du centième de décibels par seconde.

Afin de s'adapter à ces variations, des mécanismes d'adaptation des modes de codage et de modulation sont mis en oeuvre. Le but est d'adapter dynamiquement les paramètres de la forme d'onde pour s'adapter au bilan de liaison. Ce mécanisme est connu sous l'acronyme ACM pour « Adaptative Coding and Modulation » en anglais.

Comme connu en soi, le mécanisme ACM permet, en comparant le rapport signal sur bruit à des valeurs de référence de définir le mode de codage et de modulation adapté aux conditions de la liaison.

La propagation des informations entre les entités de la chaîne de transmission pour transmettre les informations sur l'état de la communication et des ordres de changement de codage et de modulation nécessite un temps substantiel qui fait que lorsque le rapport signal sur bruit diminue, il faut un certain temps pour que l'émetteur puisse réagir à cette diminution.

Afin d'assurer que le rapport signal sur bruit de la liaison ne soit jamais inférieur à un rapport signal sur bruit de référence nécessaire pour le récepteur, il est connu de prévoir une marge, ajoutée au rapport signal sur bruit de référence afin d'anticiper les pertes de bilan de liaison et pouvoir changer de codage et de modulation suffisamment tôt avant que les conditions ne soient trop dégradées.

Cette marge est appelée marge ACM.

La marge ACM dépend du pire cas de variation de bilan de liaison auquel le système de transmission doit résister ainsi que du temps de réaction du système.

En général, la marge ACM est statique et est de l'ordre de 2 à 3 décibels pour les émissions en bande Ka et la marge ACM peut être plus élevée en bande EHF.

Lorsque les conditions de propagation du signal sont stables, typiquement par ciel clair, la marge est inutile puisque le rapport signal sur bruit ne varie pas. La puissance d'émission est donc 2 à 3 décibels plus élevée que nécessaire réduisant ainsi le débit ou la bande passante de l'ordre de 50 à 100%.

Il est connu de faire que la marge ACM varie en fonction d'information historique sur l'évolution du rapport signal sur bruit.

Ces solutions présentent l'inconvénient de parfois imposer des marges ACM inutilement élevées. La variation du rapport signal bruit peut être de l'ordre de 20 décibels, conduisant à retenir une marge ACM de l'ordre de plusieurs décibels, sans que cela n'améliore la communication, les phénomènes ayant causés la variation de rapport signal sur bruit étant très bref et n'ayant pas besoin d'être compensé par un changement de codage ou de modulation.

L'invention a pour but de proposer un procédé de transmission avec codage et modulation adaptatif dans lequel l'évolution de la marge ACM :

- permet l'optimisation de la puissance d'émission lorsque les conditions de propagation du signal sont stables
- ne conduit pas à des changements de mode de codage ou de modulation inutile, notamment en cas de masquage ou d'interférence

A cet effet, l'invention a pour objet un procédé de transmission du type précité, caractérisé en ce que la marge évolue suivant une fonction statistique d'ordre supérieur à 1 de la variable caractéristique du rapport signal sur bruit mesuré par le récepteur sur au moins un horizon temporel et en ce que la marge évolue suivant une combinaison linéaire de fonctions statistiques d'ordre supérieur à 1 de la variable caractéristique du rapport signal sur bruit mesuré par le récepteur sur plusieurs horizons temporels de longueurs différentes.

Suivant des modes particuliers de mises en oeuvre, le procédé comporte une ou plusieurs des caractéristiques suivantes :

- le nombre d'horizons temporels est compris entre 2 et 4 ;
- le ou chaque horizon temporel a une durée comprise entre 2 et 90 secondes ;
- la fonction statistique dépend de l'écart type de la variable caractéristique du rapport signal sur bruit mesuré par le récepteur ;
- la fonction statistique dépend de l'écart type de la variable caractéristique du rapport signal sur bruit mesuré par le récepteur ou d'une valeur maximale prédéterminée de l'écart type si l'écart type de la variable caractéristique du rapport signal sur bruit mesuré par le récepteur est supérieur à la valeur maximale ;
- ledit procédé comporte le calcul d'un rapport signal sur bruit prédit qui correspond à la différence entre le rapport signal sur bruit mesuré diminué d'au moins une marge variable, et le codage et la modulation sont choisis en fonction de la comparaison rapport signal sur bruit prédit avec une valeur de seuil augmenté d'une marge fixe.

L'invention sera mieux comprise à la lecture de la description qui va suivre, donnée uniquement à tire d'exemple et faite en se référant aux dessins sur lesquels :

- la figure 1 est une vue schématique d'une installation de transmission pour la mise en oeuvre du procédé selon l'invention ; et
- la figure 2 est un organigramme de l'algorithme de détermination des modes de codage et de modulation dans le procédé de transmission selon l'invention.

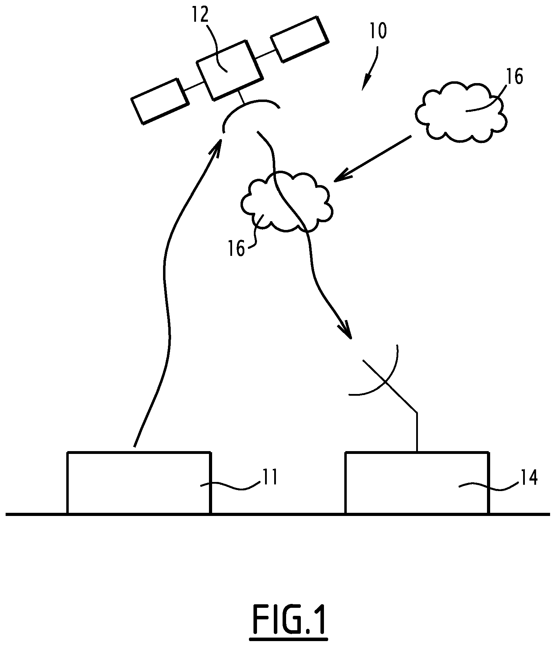

Sur la figure 1 est représentée une installation de transmission 10 mettant en oeuvre une station émettrice 11 un satellite 12 et une station de réception au sol 14. La transmission s'effectue par exemple en bande ou en bande EHF de la station émettrice 11 vers la station au sol 14 via le satellite 12, par tout moyen connu adapté. De même, la transmission s'effectue en sens inverse.

Le procédé de transmission met en oeuvre un mécanisme d'adaptation des modes de codage et de modulation connu sous l'acronyme ACM pour « Adaptative Coding and Modulation » en anglais permettant d'adapter dynamiquement les paramètres de la forme d'onde pour s'adapter au bilan de liaison.

La station au sol 14 comporte des moyens d'émission vers la station 11' via le satellite 12 d'informations concernant les caractéristiques mesurées de la transmission, et les requêtes formulées par la station de réception pour satisfaire ses besoins.

La station 11 comporte comme connu en soi des moyens de détermination du mode de codage et de modulation devant être utilisé pour la transmission en fonction d'informations reçues depuis la station 14, notamment en fonction du rapport signal sur bruit requis par la station 14, ce dernier étant noté $C/N_{0\_prédit}$.

Par conception, la station 11 est propre à déterminer le mode de codage et de modulation retenu par comparaison du rapport signal sur bruit requis par la station au sol 14 $C/N_{0\_prédit}$ avec un rapport signal sur bruit de référence $C/N_{0\_ref}$ augmenté d'une marge ACM fixe, notée $Marge_{fixe}$. La marge ACM fixe $Marge_{fixe}$ est par exemple égale à 0,5 décibel.

Sur cette figure sont illustrés également des nuages 16, lesquels peuvent dégrader les conditions de transmission, et ainsi réduire le rapport signal sur bruit mesuré par la station au sol 14, imposant éventuellement la modification du mode de codage et de modulation.

Comme connu en soi, la transmission s'effectue par trame, encore appelée paquet suivant le mode de modulation et de codage.

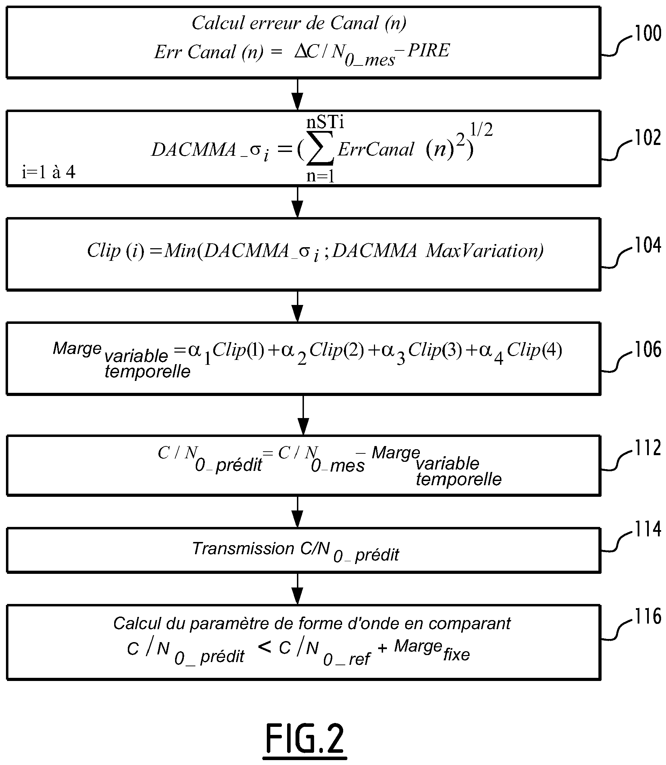

L'algorithme décrit en référence à la figure 2 est mis en oeuvre en continu pendant la transmission partiellement dans la station au sol 14 et dans station 11 par des moyens de calcul mettant en oeuvre des programmes d'ordinateurs adaptés.

Comme illustré sur la figure 2, pendant la transmission et pour chaque groupe n de k trames, une erreur de canal noté $ErrCanal(n)$ est calculée à l'étape 100 par le récepteur à savoir la station au sol 14 dans l'exemple considéré. Un groupe de k trames est appelé super-trame ST (k est choisi pour que la durée d'une super trame soit de l'ordre de 100 ms afin d'avoir des statistiques significatives). Cette erreur de canal est la différence entre le rapport signal sur bruit mesuré par la station au sol 14 sur la super trame n notée $\Delta C/N_{0\_mes\_ST\_n}$ et la puissance d'émission notée $PIRE_{Consigne\_ST\_n}$ de la station 11.

Ainsi, $ErrCanal(n) = \Delta C/N_{0\_mes\_ST\_n} - PIRE_{Consigne\_ST\_n}$.

A l'étape 102, et pour plusieurs horizons temporels différents numérotés i, l'écart type de canal noté $DACMMA\_\sigma_i$ est déterminé, par le récepteur sur les $N_i$ dernières secondes constituant l'horizon temporel i considéré.

Par exemple, les horizons temporels ont des durées de 3, 10, 30 et 60 secondes de sorte que $N_1 = 3$ ; $N_2 = 10$ ; $N_3 = 30$ ; $N_4 = 60$.

Ainsi, l'écart type de l'erreur de canal pour un horizon temporel déterminé i est donné par

$$DACMMA\_\sigma_i = \left( \frac{1}{nST_i} \sum_{n=1}^{nST_i} ErrCanal(n)^2 - \left( \frac{1}{nST_i} \sum_{n=1}^{nST_i} ErrCanal(n) \right)^2 \right)^{1/2} \quad \text{où } nST_i \text{ est le nombre de su-}$$

per trames dans l'horizon temporel i. A l'étape 104 est déterminé un écart type borné pour chaque horizon temporel i par le récepteur. Cet écart type borné est noté *Clip(i)* et est donné par *Clip(i) = Min(DACMMA_$\sigma_i$ ; DACMMA MaxVariation)* où *DACMMA MaxVariation* est une constante. Ainsi, l'écart type borné est égal à l'écart type de l'erreur de canal si celui-ci est inférieur à une valeur maximale prédéterminée de l'écart type notée *DACMMA MaxVariation* ou à la valeur maximale prédéterminée de l'écart type sinon, ceci afin de ne pas prendre en compte des variations trop importantes de l'écart type.

A l'étape 106, le récepteur détermine une marge variable temporelle constituée d'une combinaison linéaire des écarts types bornés *Clip(i)* calculés sur les quatre horizons temporels. Ainsi, la marge variable temporelle s'écrit *Marge$_{variable\ temporelle}$ = $\alpha_1$ Clip(1) + $\alpha_2$ Clip(2) + $\alpha_3$ Clip(3) + $\alpha_4$ Clip(4)* où $\alpha_1$, $\alpha_2$, $\alpha_3$ et $\alpha_4$ sont des nombres réels positifs non nuls. Par défaut, les coefficients $\alpha_1$, $\alpha_2$, $\alpha_3$ et $\alpha_4$ sont tous pris égal à 1.

A l'étape 112, le récepteur calcule un rapport signal sur bruit prédit noté *C/N$_{0\_prédit}$* qui correspond à la différence entre le rapport signal sur bruit mesuré diminué de la marge variable calculée à l'étape.

Ainsi, *C/N$_{0\_prédit}$ = C/N$_{0-mes}$ - Marge$_{variable\ temporelle}$*.

On conçoit qu'avec un tel procédé, la marge ACM peut être maintenue à un niveau très réduit au cours des périodes de faible variation du rapport signal sur bruit, notamment les périodes de ciel clair et que la marge ACM se voit augmentée de manière rapide lors des évolutions significatives mais non brutale du rapport signal sur bruit, permettant ainsi d'anticiper suffisamment les modifications de mode de codage et de modulation pour faire que le rapport signal sur bruit puisse être maintenu en toute circonstance supérieure au rapport signal sur bruit exigé par le récepteur, sans pour autant que le rapport signal sur bruit ne soit constamment très supérieur au rapport signal sur bruit nécessaire au récepteur, notamment pendant les périodes de temps clair.

## Revendications

1. Procédé de transmission entre un émetteur (11) et un récepteur (14) en utilisant un mode de codage et de modulation adaptatif, dans lequel le codage et la modulation sont choisis en fonction de la comparaison d'une variable caractéristique du rapport signal sur bruit, C/N$_{0\_mes}$, mesuré par le récepteur (14) avec une valeur de seuil, C/N$_{0\_ref}$, augmenté d'une marge, laquelle marge est variable en fonction de l'évolution antérieure du rapport signal sur bruit, **caractérisé en ce que** la marge évolue suivant une fonction statistique d'ordre supérieur à 1 de la variable caractéristique du rapport signal sur bruit mesuré par le récepteur (14) sur au moins un horizon temporel et **en ce que** la marge évolue suivant une combinaison linéaire de fonctions statistiques d'ordre supérieur à 1 de la variable caractéristique du rapport signal sur bruit mesuré par le récepteur (14) sur plusieurs horizons temporels de longueurs différentes.

2. Procédé selon la revendication 1, **caractérisé en ce que** le nombre d'horizons temporels est compris entre 2 et 4.

3. Procédé selon l'une quelconque des revendications précédentes, **caractérisé en ce que** le ou chaque horizon temporel a une durée comprise entre 2 et 90 secondes.

4. Procédé selon l'une quelconque des revendications précédentes, **caractérisé en ce que** la fonction statistique dépend de l'écart type de la variable caractéristique du rapport signal sur bruit mesuré par le récepteur (14).

5. Procédé selon la revendication 4, **caractérisé en ce que** la fonction statistique dépend de l'écart type de la variable caractéristique du rapport signal sur bruit mesuré par le récepteur (14) ou d'une valeur maximale prédéterminée de l'écart type, *DACMMA MaxVariation,* si l'écart type de la variable caractéristique du rapport signal sur bruit mesuré par le récepteur (14) est supérieur à la valeur maximale, *DACMMA MaxVariation.*

6. Procédé selon l'une quelconque des revendications précédentes, caractérisé qu'il comporte le calcul d'un rapport signal sur bruit prédit , *C/N$_{0\_prédit}$*, qui correspond à la différence entre le rapport signal sur bruit mesuré diminué d'au moins une marge variable, *C/N$_{0\_prédit}$ = C/N$_{0-mes}$ - Marge$_{variable\ temporelle}$, et en ce que* le codage et la modulation sont choisis en fonction de la comparaison rapport signal sur bruit prédit, *C/N$_{0\_prédit}$*, avec une valeur de seuil, C/N$_{0\_ref}$, augmenté d'une marge fixe.

**Patentansprüche**

1. Übertragungsverfahren zwischen einem Sender (11) und einem Empfänger (14) unter Verwendung eines adaptiven Modulations- und Kodiermodus, bei dem die Kodierung und Modulation auf der Grundlage des Vergleichs einer charakteristischen Variablen des durch den Empfänger gemessenen Signal-Rausch-Verhältnisses, $C/N_{0\_mes}$, mit einem Schwellwert, $C/N_{0\_ref}$, erhöht um eine Marge, ausgewählt wird, wobei die Marge in Abhängigkeit der vorherigen Entwicklung des Signal-Rausch-Verhältnisses variabel ist,
**dadurch gekennzeichnet, dass** sich die Marge gemäß einer statistischen Funktion einer Ordnung größer als 1 der charakteristischen Variablen des durch den Empfänger (14) gemessenen Signal-Rausch-Verhältnisses über mindestens einen Zeithorizont entwickelt, und dadurch, dass sich die Marge gemäß einer Linearkombination statistischer Funktionen einer Ordnung größer als 1 der charakteristischen Variablen des durch den Empfänger (14) gemessenen Signal-Rausch-Verhältnisses über mehrere Zeithorizonte unterschiedlicher Länge entwickelt.

2. Verfahren nach Anspruch 1, **dadurch gekennzeichnet, dass** die Anzahl der Zeithorizonte zwischen 2 und 4 liegt.

3. Verfahren nach einem der vorhergehenden Ansprüche, **dadurch gekennzeichnet, dass** der oder jeder Zeithorizont eine Dauer zwischen 2 und 90 Sekunden hat.

4. Verfahren nach einem der vorhergehenden Ansprüche, **dadurch gekennzeichnet, dass** die statistische Funktion von der Standardabweichung der charakteristischen Variablen des vom Empfänger (14) gemessenen Signal-Rausch-Verhältnisses abhängt.

5. Verfahren nach Anspruch 4, **dadurch gekennzeichnet, dass** die statistische Funktion von der Standardabweichung der charakteristischen Variablen des vom Empfänger (14) gemessenen Signal-Rausch-Verhältnisses oder einem vorgegebenen Maximalwert der Standardabweichung, *DACMMA MaxVariation,* abhängt, falls die Standardabweichung der charakteristischen Variablen des vom Empfänger (14) gemessenen Signal-Rausch-Verhältnisses größer ist als der Maximalwert, *DACMMA MaxVariation.*

6. Verfahren nach einem der vorhergehenden Ansprüche, **dadurch gekennzeichnet, dass** es die Berechnung eines vorhergesagten Signal-zu-Rausch-Verhältnisses, *C/N0_vorhergesagt,* aufweist, das der Differenz zwischen dem gemessenen Signal-zu-Rausch-Verhältnis minus mindestens einer variablen Marge entspricht, $CI_{N0\_vorhergesagt} = C/_{N0\_mes}\text{-}Marge_{zeitlich\ variabel}$, und dadurch, dass die Kodierung und die Modulation in Abhängigkeit von dem Vergleich des vorhergesagten Signal-Rausch-Verhältnises, $C/N_{0\_vorhergesagt}$, mit einem um eine feste Marge erhöhten Schwellwert, $C/N_{0\_ref}$, gewählt werden.

**Claims**

1. A method of transmission between a transmitter (11) and a receiver (14) using a mode of adaptive modulation and coding, wherein the modulation and coding are selected based on the comparison of a characteristic variable of the signal to noise ratio, $C/N_{0\_mes}$, measured by the receiver (14) with a threshold value, $C/N_{0\_ref}$, plus a margin, which margin is variable depending on the prior change in the signal to noise ratio,
**characterised in that** the margin changes based on a statistical function of a higher order than 1 of the characteristic variable of the signal to noise ratio measured by the receiver (14) over at least one time horizon, and **in that** the margin changes based on a linear combination of statistical functions of a higher order than 1 of the characteristic variable of the signal to noise ratio measured by the receiver (14) over several time horizons of different lengths.

2. A method according to claim 1, **characterised in that** the number of time horizons considered is between 2 and 4.

3. A method according to any one of the preceding claims, **characterised in that** the or each time horizon consists of a period of between 2 and 90 seconds.

4. A method according to any one of the preceding claims, **characterised in that** the statistical function depends on the standard deviation of the characteristic variable of the signal to noise ratio measured by the receiver (14).

5. A method according to claim 4, **characterised in that** the statistical function depends on the standard deviation of the characteristic variable of the signal to noise ratio measured by the receiver (14) or on a predetermined maximum value of the standard deviation, *DACMMA MaxVariation,* if the standard deviation of the characteristic variable of the signal to noise ratio measured by the receiver (14) is greater than the maximum value, *DACMMA MaxVariation* .

6. A method according to any one of the preceding claims, characterised that it includes the calculation of a predicted signal to noise ratio, $C/N_{0\_prédit}$, that corresponds to the difference between the measured signal to noise ratio minus at least one variable margin, $C/N_{0\_prédit} = C/N_{0\_mes} - Marge_{variable\ temporelle}$, and in that the modulation and coding are selected based on the comparison of the predicted signal to noise ratio, $C/N_{0\_prédit}$, with a threshold value, $C/N_{0\_ref}$, plus a fixed margin.

<u>FIG.1</u>

$$\text{Calcul erreur de Canal (n)}$$
$$\text{Err Canal (n)} = \Delta C / N_{0\_mes} - PIRE$$

/—100

$$\text{DACMMA}\_\sigma_i = \left(\sum_{n=1}^{nSTi} ErrCanal\ (n)^2\right)^{1/2}$$
$$i=1\ \text{à}\ 4$$

/—102

$$Clip\ (i) = Min(DACMMA\_\sigma_i\ ;DACMMA\ MaxVariation)$$

/—104

$$Marge_{variable\ temporelle} = \alpha_1 Clip(1) + \alpha_2 Clip(2) + \alpha_3 Clip(3) + \alpha_4 Clip(4)$$

/—106

$$C/N_{0\_prédit} = C/N_{0\_mes} - Marge_{variable\ temporelle}$$

/—112

$$\text{Transmission } C/N_{0\_prédit}$$

/—114

$$\text{Calcul du paramètre de forme d'onde en comparant}$$
$$C/N_{0\_prédit} < C/N_{0\_ref} + Marge_{fixe}$$

/—116

## FIG.2

**EP 2 717 503 B1**

RÉFÉRENCES CITÉES DANS LA DESCRIPTION

**Documents brevets cités dans la description**

- US 20020058505 A